# EUROPEAN PATENT APPLICATION

(11) **EP 1 538 758 A1**
(43) Date of publication of application: **08.06.2005**
(21) Application number: 04026920.1
(22) Date of filing: 12.11.2004
(51) Int. Cl.: H04B 1/04, H04B 1/48

(54) **Radio device**

(30) Priority: 02.12.2003 JP 2003403378
(71) Applicant: MATSUSHITA ELECTRIC INDUSTRIAL CO., LTD., Kadoma-shi, Osaka 571-8501 (JP)
(72) Inventor: Kato, Ichiro, Kosai-shi Shizuoka-ken 431-0431 (JP); Sato, Yuji, Kyoto-shi Kyoto-fu 600-8415 (JP); Tomizawa, Toshiharu, Yokohama-shi Kanagawa-ken 224-0003 (JP)
(74) Representative: Grünecker, Kinkeldey, Stockmair & Schwanhäusser Anwaltssozietät

(57) **Abstract**

A radio device in which a variation in the match condition of the antenna, occurring due to a change in the antenna itself or the surrounding environment, is detected based on the amount of reflection or a variation in the current consumption of the power amplifier. If such a variation is detected, the match condition of the antenna itself is changed by connecting the antenna to a terminator or to a matching element, or by using a spare antenna whose match condition has not been varied. Thus, it is possible to prevent the power amplifier from being broken.

## Description

### BACKGROUND OF THE INVENTION

### Field of the Invention

The present invention relates to a radio device, and more particularly to a radio device capable of accommodating variations in the match condition of an antenna.

### Description of the Background Art

A radio device typically includes a transmitter/receiver antenna for communicating with other devices. For efficient transmission/reception, the antenna is matched for the frequency range in which the device is used. If the antenna is sufficiently matched and it is installed in an ideal environment in free space, it will operate in an ideal manner. That is, all of the signal inputted to the antenna will be radiated with no reflected wave coming back toward the circuit side.

In practice, however, the antenna may be in contact with a human body or in proximity to a piece of metal, or the antenna itself may be broken or chipped. In such a case, the antenna will be mismatched, even though the antenna is sufficiently matched under an ideal environment. When transmitting a signal, for example, under such a situation, most of the power of the input signal comes back to the power amplifier in the form of a reflected wave. Then, at the power amplifier, the power being used for amplifying an input signal and the reflected power coming back from the antenna end are superposed on each other. The superposed power is entirely consumed as heat, whereby an abnormal temperature increase occurs at the power amplifier, which may in worst cases break the power amplifier. While the gain, the output power and the current consumption of a power amplifier are determined by the load on the power amplifier, the load on the power amplifier varies following a variation in the match condition of the antenna. Depending on the match condition of the antenna, the current or the output power of the power amplifier may become excessive. If the power in the power amplifier exceeds the withstand power of an element therein, the power amplifier may be broken in worst cases.

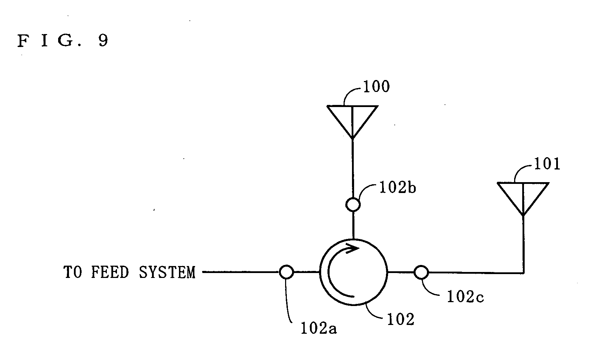

A conventional approach to this problem is to provide an isolator between the power amplifier and the antenna so as to prevent a variation in the match condition of the antenna from influencing the power amplifier. Another conventional approach is to provide a spare antenna, in addition to a main antenna, in preparation for cases where the main antenna is broken. For example, Japanese Laid-Open Patent Publication No. 9-284169 proposes an antenna selector circuit for switching from a broken antenna to another antenna. The antenna selector circuit will now be described with reference to FIG. 9.

FIG. 9 illustrates a configuration of the conventional antenna selector circuit. Referring to FIG. 9, the antenna selector circuit includes a circulator 102 with three terminals. The feed system is connected to a first terminal 102a of the circulator 102, a main antenna 100 to a second terminal 102b, and a spare antenna 101 to a third terminal 102c. In FIG. 9, the three terminals of the circulator 102 are designated as the first terminal 102a, the second terminal 102b and the third terminal 102c successively in the direction of circulation.

Referring to FIG. 9, if the main antenna 100 is broken, making the impedance at the second terminal 102b infinite, the first terminal 102a, to which the feed system is connected, is coupled to the third terminal 102c, to which the spare antenna 101 is connected. Thus, when the main antenna 100 is broken, the power feed connection can be automatically switched to the spare antenna 101 by the antenna selector circuit.

With these conventional approaches, however, it is necessary to provide an isolator or a circulator between the power amplifier and the antenna. In other words, these approaches require an additional component to be added to the radio device, thus hindering a reduction in size or cost of the radio device. Moreover, the provision of the additional component between the power amplifier and the antenna increases the loss of transmission power, thus reducing the transmission power or increasing the power consumption.

### SUMMARY OF THE INVENTION

Therefore, an object of the present invention is to provide a radio device, inwhichthepoweramplifiercanbeprevented from being broken, while a reduction in size and cost of the device can be readily made.

Another object of the present invention is to provide a radio device, in which the power amplifier can be prevented from being broken, while it is possible to readily suppress a reduction in the transmission power and an increase in the power consumption.

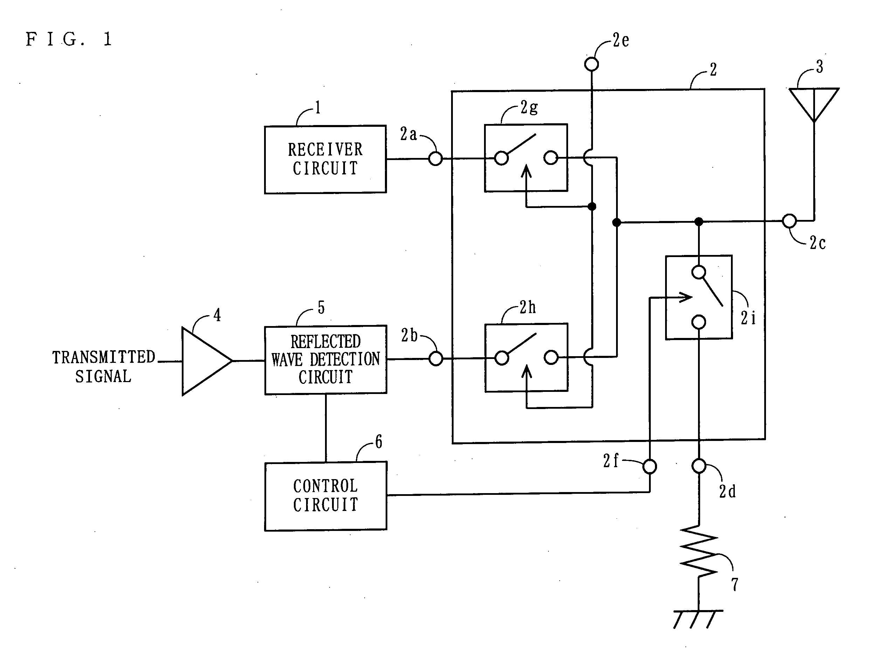

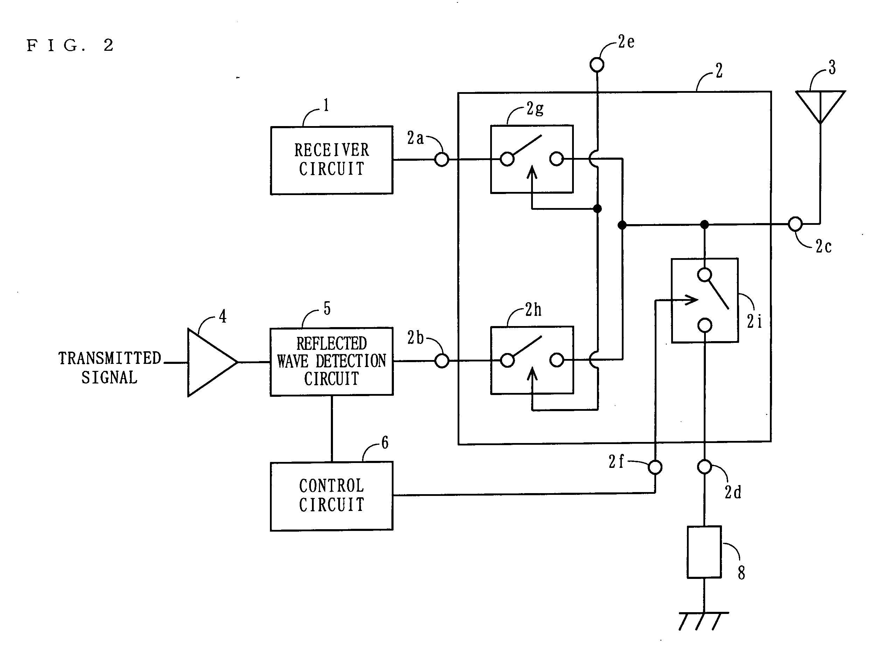

The present invention has the following features to attain the objects mentioned above. A first aspect of the present invention is directed to a radio device, including an antenna, a power amplifier, an element, a first connection switch, a match detection section and a control circuit. The power amplifier has an output terminal connected to the antenna, and amplifies a transmitted signal to be radiated through the antenna. The element is connected to the antenna, and is provided for matching the antenna . The element may be, for example, a terminator (see FIG. 1) or a matching element (see FIG. 2). The first connection switch is provided between the antenna and the element. The match detection section detects a variation in a match condition of the antenna. The control circuit closes the first connection switch when a variation in the match condition of the antenna is detected by the match detection section.

A second aspect of the present invention is directed to a radio device, including an antenna, a power amplifier, a spare antenna, a first connection switch, a match detection section and a control circuit. The power amplifier has an output terminal connected to the antenna, and amplifies a transmitted signal to be radiated through the antenna. The spare antenna is connected to the power amplifier. The first connection switch is provided between the spare antenna and the power amplifier. The match detection section detects a variation in a match condition of the antenna. The control circuit closes the first connection switch when a variation in the match condition of the antenna is detected by the match detection section.

According to the present invention, a variation in the match condition of the antenna, occurring due to a change in the antenna itself or the surrounding environment, is detected based on the amount of reflection or a variation in the current consumption of the power amplifier. If such a variation is detected, the match condition of the antenna itself is changed. Thus, the radio device can prevent the power amplifier from being broken. Moreover, according to the present invention, switches are used for changing the match condition of the antenna. Since the radio device of the present invention uses simple components such as switches, a reduction in size and cost of the device can be readily made.

These and other objects, features, aspects and advantages of the present invention will become more apparent from the following detailed description of the present invention when taken in conjunction with the accompanying drawings.

### BRIEF DESCRIPTION OF THE DRAWINGS

FIG. 1 illustrates a radio device according to Embodiment 1 of the present invention;
FIG. 2 illustrates a radio device according to Embodiment 2 of the present invention;
FIG. 3 illustrates a radio device according to Embodiment 3 of the present invention;
FIG. 4 illustrates a radio device according to Embodiment 4 of the present invention;
FIG. 5 illustrates a radio device according to Embodiment 5 of the present invention;
FIG. 6 illustrates a radio device according to an alternative embodiment of the present invention;
FIG. 7 illustrates a radio device according to an alternative embodiment of the present invention;
FIG. 8 illustrates a radio device according to an alternative embodiment of the present invention; and
FIG. 9 illustrates a configuration of a conventional antenna selector circuit.

### DESCRIPTION OF THE PREFERRED EMBODIMENTS

### (Embodiment 1)

FIG. 1 illustrates a radio device according to Embodiment 1 of the present invention. Referring to FIG. 1, the radio device includes a receiver circuit 1, an antenna connection selector switch 2, a transmitter/receiver antenna 3, a power amplifier 4, a reflected wave detection circuit 5, a control circuit 6 and a terminator 7. The antenna connection selector switch 2 includes a first terminal 2a, a second terminal 2b, a third terminal 2c, a fourth terminal 2d, a fifth terminal 2e and a sixth terminal 2f. The receiver circuit 1 is connected to the first terminal 2a. The transmitter/receiver antenna 3 is connected to the third terminal 2c. The reflected wave detection circuit 5 is provided between the output terminal of the power amplifier 4 and the second terminal 2b. The control circuit 6 is provided between the reflected wave detection circuit 5 and the sixth terminal 2f. The terminator 7 is connected to the fourth terminal 2d.

The antenna connection selector switch 2 includes a first connection switch 2i and a second connection switch. The second connection switch includes a first sub-switch 2g and a second sub-switch 2h. The first connection switch 2i is provided between the third terminal 2c and the fourth terminal 2d. The first sub-switch 2g is provided between the first terminal 2a and the third terminal 2c. The second sub-switch 2h is provided between the second terminal 2b and the third terminal 2c.

The first and second sub-switches 2g and 2h are connected to the fifth terminal 2e. The first and second sub-switches 2g and 2h are operated based on signals inputted through the fifth terminal 2e. In Embodiment 1, when the fifth terminal 2e is ON, the first sub-switch 2g is ON (i.e., closed) and the second sub-switch 2h is OFF (i.e., open) , whereas when the fifth terminal 2e is OFF, the first sub-switch 2g is OFF and the second sub-switch 2h is ON.

The first connection switch 2i is connected to the sixth terminal 2f. The first connection switch 2i is operated based on signals inputted through the sixth terminal 2f. In Embodiment 1, when the sixth terminal 2f is ON, the first connection switch 2i is ON, whereas when the sixth terminal 2f is OFF, the first connection switch 2i is OFF.

Now, the operation of the radio device having such a configuration as described above will be described. When the radio device receives a signal through the transmitter/receiver antenna 3, the fifth terminal 2e is turned ON, whereas when the radio device transmits a signal through the transmitter/receiver antenna 3, the fifth terminal 2e is turned OFF. In other words, the radio device inputs an ON signal to the fifth terminal 2e when receiving a signal and an OFF signal when transmitting a signal. Thus, as the fifth terminal 2e is turned ON, the transmitter/receiver antenna 3 and the receiver circuit 1 are connected to each other via the first sub-switch 2g. As a result, a signal received through the transmitter/receiver antenna 3 (a "received signal") is inputted to the receiver circuit 1. As the fifth terminal 2e is turned OFF, the reflected wave detection circuit 5 and the transmitter/receiver antenna 3 are connected to each other via the second sub-switch 2h. Then, a signal to be transmitted (a "transmitted signal") inputted to the power amplifier 4 is radiated from the transmitter/receiver antenna 3 via the reflected wave detection circuit 5 and the second sub-switch 2h.

In Embodiment 1, the first sub-switch 2g and the second sub-switch 2h are turned ON and OFF, respectively, when the fifth terminal 2e is ON, and OFF and ON, respectively, when the fifth terminal 2e is OFF. In other embodiments, the ON/OFF states of these sub-switches as controlled by the fifth terminal 2e may be reversed. Specifically, the first sub-switch 2g and the second sub-switch 2h may be turned ON and OFF, respectively, when the fifth terminal 2e is OFF, and OFF and ON, respectively, when the fifth terminal 2e is ON.

Consider a case where the match condition of the transmitter/receiver antenna 3 varies for some reason. The reason may be the transmitter/receiver antenna 3 being in contact with a human body or in proximity to a piece of metal, or may be the transmitter/receiver antenna 3 itself being broken or chipped, for example. In such a case, not all of the transmitted signal inputted to the power amplifier 4 is radiated through the transmitter/receiver antenna 3, but some of the transmitted signal is reflected. In the example shown in FIG. 1, the reflected wave enters the reflected wave detection circuit 5. If a reflected wave exceeding a predetermined level is detected, the reflected wave detection circuit 5 outputs to the control circuit 6 a detection signal indicating the detection of a reflected wave. The reflected wave detection circuit 5 detects a variation in the match condition of the transmitter/receiver antenna 3 based on the detection of a reflected wave. If a variation in the match condition of the transmitter/receiver antenna 3 is detected by the reflected wave detection circuit 5, the control circuit 6 closes the first connection switch 2i. Thus, when receiving the detection signal, the control circuit 6 turns ON the sixth terminal 2f. As the sixth terminal 2f is turned ON, the first connection switch 2i is turned ON, whereby the transmitter/receiver antenna 3 and the terminator 7 are connected to each other, thus terminating the transmitter/receiver antenna 3. As a result, the transmitter/receiver antenna 3 is matched by the terminator 7, thereby suppressing a variation in the load on the power amplifier 4 and preventing the power amplifier 4 from being broken.

In the example shown in FIG. 1, it is preferred that the control circuit 6 keeps the first connection switch 2i ON for a predetermined period of time after it stops receiving the detection signal from the reflected wave detection circuit 5. If the first connection switch 2i is turned OFF as soon as the detection signal stops being received from the reflected wave detection circuit 5, there may be some problems because a reflected wave may occur again immediately after turning OFF the first connection switch 2i. Specifically, if the control circuit 6 is designed so that the first connection switch 2i is turned OFF as soon as the detection signal stops being received, variations in the match condition of the transmitter/receiver antenna 3 and the variation-suppressing operation of terminating the transmitter/receiver antenna 3 will be repeated frequently. Where the radio device performs the signal-transmitting operation and the signal-receiving operation alternately at regular intervals, the predetermined period of time mentioned above may be, for example, the amount of time required to perform the signal-transmitting operation a predetermined number of times. Preferably, the control circuit 6 keeps the first connection switch 2i ON also during signal-receiving operations.

As described above, in Embodiment 1, when a match condition of the transmitter/receiver antenna 3 varies, the transmitter/receiver antenna 3 is terminated so as to achieve a matched state. Thus, the radio device can prevent the power amplifier 4 from being broken. Moreover, in Embodiment 1, the objective of changing the antenna match condition is realized by the antenna connection selector 2, which is simply a plurality of switches. Therefore, the radio device of Embodiment 1, having such a simple structure, can be made by using a minimum number of components without requiring a large area.

While the first connection switch 2i is provided between the second sub-switch 2h and the third terminal 2c in the example shown in FIG. 1, it may be provided between the second sub-switch 2h the second terminal 2b. This similarly applies to alternative embodiments of the present invention, which will be described later.

### (Embodiment 2)

FIG. 2 illustrates a radio device according to Embodiment 2 of the present invention. The radio device of FIG. 2 is similar to that shown in FIG. 1 except that a matching element 8, instead of the terminator 7, is connected to the fourth terminal 2d. In FIG. 2, like elements to those shown in FIG. 1 are given like reference numerals and will not be further described below. Accordingly, the following description of the present embodiment focuses on what is different from Embodiment 1.

In Embodiment 2, as in Embodiment 1, the first connection switch 2i is turned ON when a reflected wave occurs due to a variation in the match condition of the transmitter/receiver antenna 3. Then, the transmitter/receiver antenna 3 is connected to the matching element 8 via the first connection switch 2i. In Embodiment 2, the transmitter/receiver antenna 3 is matched by the matching element 8, thereby suppressing a variation in the load on the power amplifier 4 and preventing the power amplifier 4 from being broken. For example, the value of the matching element 8 is set so that the match condition of the transmitter/receiver antenna 3 is optimal when the transmitter/receiver antenna 3 is in proximity to a piece of metal. With this radio device, a matched state can be achieved both when the transmitter/receiver antenna 3 is in free space (where it is under an ideal environment) and when it is in proximity to a piece of metal. Thus, the value of the matching element 8 is preferably determined to be an appropriate value in view of a situation or situations expected to cause a variation in the match condition of the transmitter/receiver antenna 3.

### (Embodiment 3)

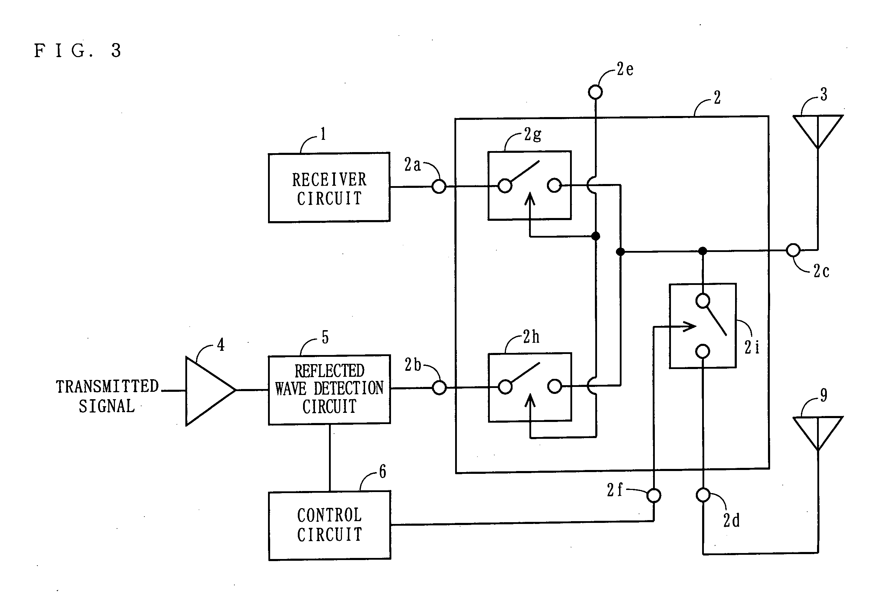

FIG. 3 illustrates a radio device according to Embodiment 3 of the present invention. The radio device of FIG. 3 is similar to that shown in FIG. 1 except that a transmitter/receiver spare antenna 9, instead of the terminator 7, is connected to the fourth terminal 2d. In FIG. 2, like elements to those shown in FIG. 1 are given like reference numerals and will not be further described below. Accordingly, the following description of the present embodiment focuses on what is different from Embodiment 1.

In Embodiment 3, as in Embodiment 1, the first connection switch 2i is turned ON when a reflected wave occurs due to a variation in the match condition of the transmitter/receiver antenna 3. Then, the transmitter/receiver spare antenna 9 is connected to the reflected wave detection circuit 5 via the first connection switch 2i. As a result, the transmitted signal is radiated from the matched transmitter/receiver spare antenna 9, thereby suppressing a variation in the load on the power amplifier 4 and preventing the power amplifier 4 from being broken.

### (Embodiment 4)

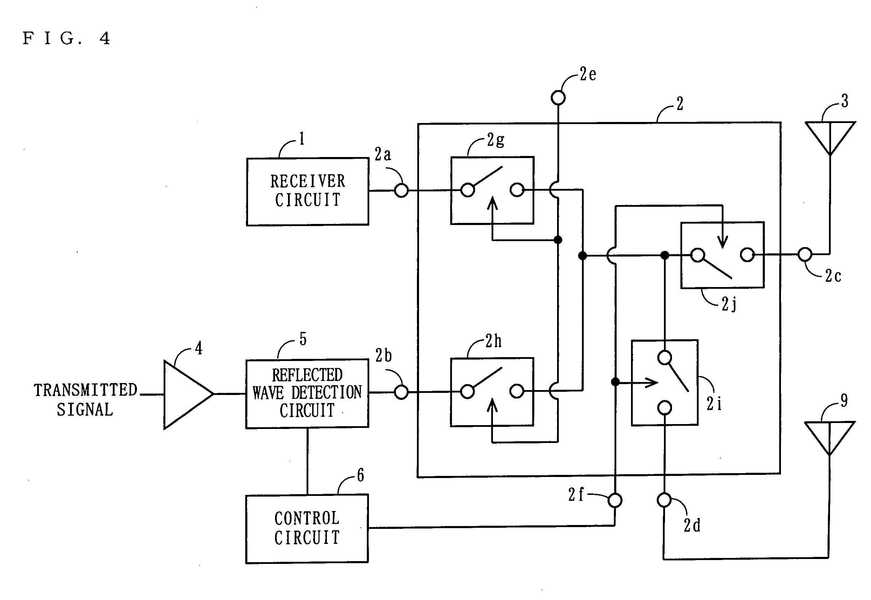

FIG. 4 illustrates a radio device according to Embodiment 4 of the present invention. The radio device of FIG. 4 is similar to that shown in FIG. 3 except that the antenna connection selector switch 2 includes a third connection switch 2j. In FIG. 4, like elements to those shown in FIG. 3 are given like reference numerals and will not be further described below. Accordingly, the following description of the present embodiment focuses on what is different from Embodiment 3.

Referring to FIG. 4, the third connection switch 2j is provided between the third terminal 2c and the second sub-switch 2h. The third connection switch 2j is operated based on signals inputted through the sixth terminal 2f. Specifically, when the sixth terminal 2f is ON, the third connection switch 2j is OFF, whereas when the sixth terminal 2f is OFF, the third connection switch 2j is ON.

In Embodiment 4, the third connection switch 2j is turned OFF when a reflected wave occurs due to a variation in the match condition of the transmitter/receiver antenna 3. Then, the power amplifier 4 is disconnected from the transmitter/receiver antenna 3 by the third connection switch 2j. Therefore, even if there occurs a match condition variation or a break such that the transmitter/receiver antenna 3 is shorted, the transmitter/receiver spare antenna 9 is not influenced. Moreover, as in Embodiment 3, the first connection switch 2i is turned ON when a reflected wave occurs due to a variation in the match condition of the transmitter/receiver antenna 3. As a result, the transmitted signal is radiated from the matched transmitter/receiver spare antenna 9, thereby suppressing a variation in the load on the power amplifier 4 and preventing the power amplifier 4 from being broken.

### (Embodiment 5)

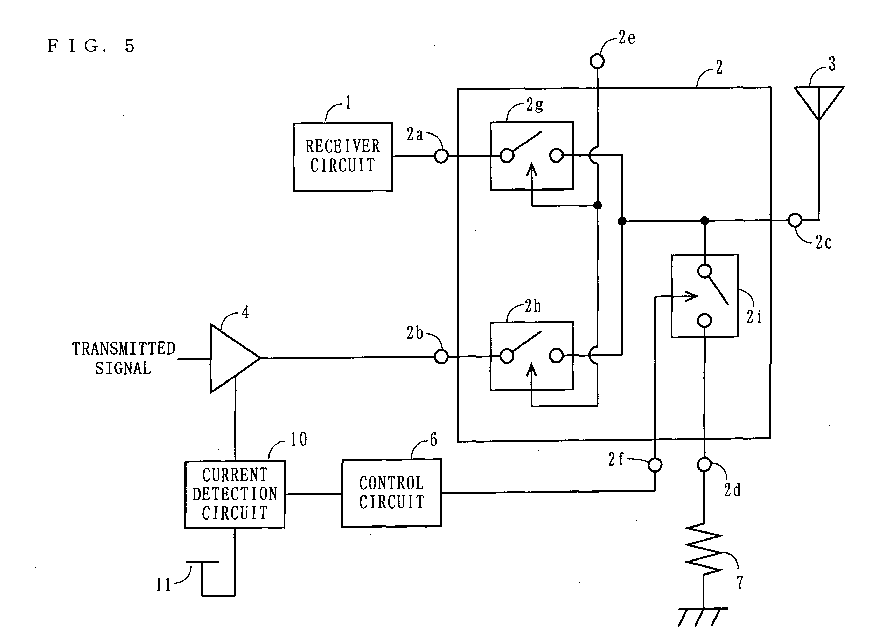

FIG. 5 illustrates a radio device according to Embodiment 5 of the present invention. The radio device of FIG. 5 is similar to that shown in FIG. 1 except that the radio device includes a current detection circuit 10 and a power supply terminal 11, instead of the reflected wave detection circuit 5. In FIG. 5, like elements to those shown in FIG. 1 are given like reference numerals and will not be further described below. Accordingly, the following description of the present embodiment focuses on what is different from Embodiment 1.

Referring to FIG. 5, the current detection circuit 10 is provided between the power supply terminal of the power amplifier 4 and the control circuit 6. The power supply terminal 11 is connected to the current detection circuit 10. The power supply terminal 11 supplies power to the power amplifier 4 via the current detection circuit 10.

In Embodiment 5, if the match condition of the transmitter/receiver antenna 3 varies, the load on the power amplifier 4 varies, whereby the current consumption of the power amplifier 4 varies. If there occurs a variation in the current consumption of the power amplifier 4 exceeding a predetermined level, the current detection circuit 10 outputs to the control circuit 6 a detection signal indicating the detection of a variation in the current consumption of the power amplifier 4. Upon receiving the detection signal, the control circuit 6 turns ON the first connection switch 2i. Then, the transmitter/receiver antenna 3 and the terminator 7 are connected to each other. Thus, the radio device of Embodiment 5 terminates the transmitter/receiver antenna 3 when the current consumption of the power amplifier 4 varies. As a result, the transmitter/receiver antenna 3 is matched by the terminator 7, thereby suppressing a variation in the load on the power amplifier 4 and preventing the power amplifier 4 from being broken.

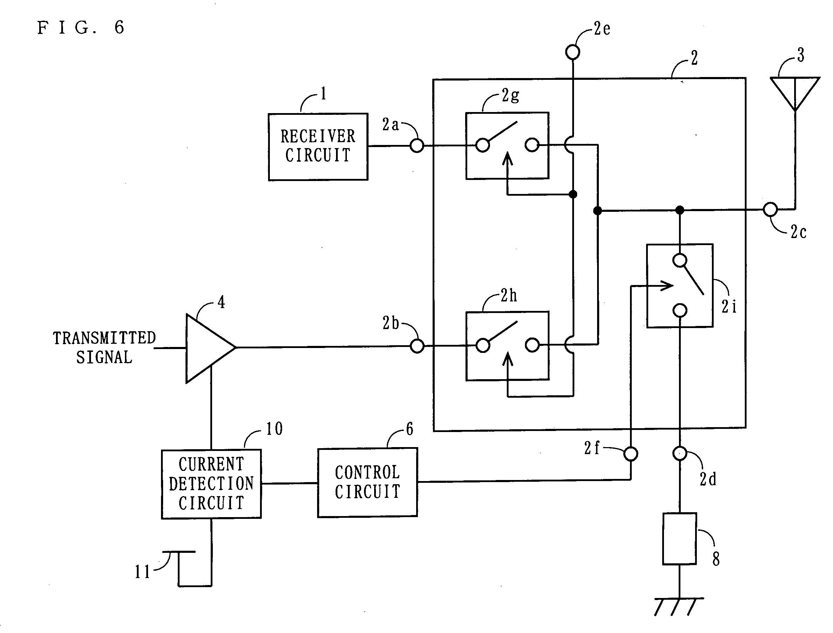

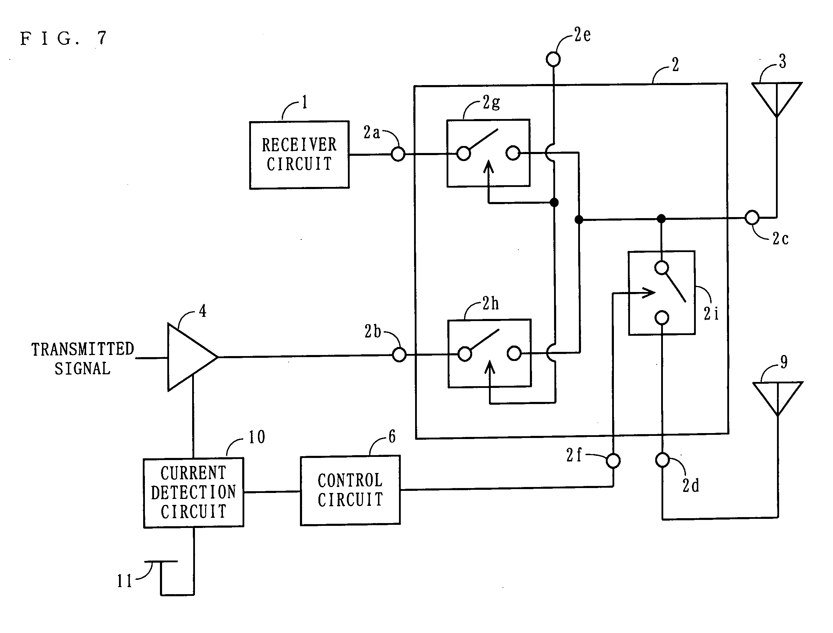

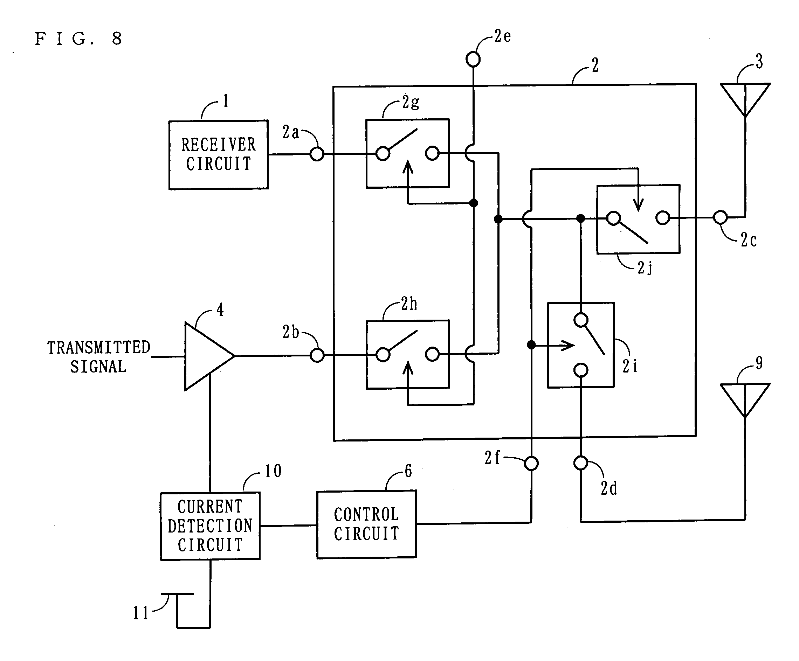

As described above, in Embodiment 5, whether or not the match condition of the transmitter/receiver antenna 3 has varied is detected by detecting a variation in the current consumption of the power amplifier 4. Also in this way, it is possible to terminate the transmitter/receiver antenna 3 according to a variation in the match condition of the transmitter/receiver antenna 3. While Embodiment 5 is similar to Embodiment 1 except that a variation in the current consumption of the power amplifier 4 is detected, a variation in the current consumption of the power amplifier 4 may be detected also in Embodiments 2 to 4. Specifically, in an alternative embodiment, the matching element 8, instead of the terminator 7, may be connected to the fourth terminal 2d as illustrated in FIG. 6. In another alternative embodiment, the transmitter/receiver spare antenna 9, instead of the terminator 7, may be connected to the fourth terminal 2d as illustrated in FIG. 7. In still another alternative embodiment, the transmitter/receiver spare antenna 9, instead of the terminator 7, may be connected to the fourth terminal 2d, while the antenna connection selector switch 2 includes the third connection switch 2j, as illustrated in FIG. 8. Advantageous effects similar to those of Embodiments 1 to 5 can be obtained also with the configurations illustrated in FIG. 6 to FIG. 8. In the examples shown in FIG. 5 to FIG. 8, as in the example shown in FIG. 1, it is preferred that the control circuit 6 keeps the first connection switch 2i ON for a predetermined period of time after it stops receiving the detection signal from the current detection circuit 10.

Thus, the radio device of the present invention realizes various objectives, including preventing the power amplifier from being broken, and accommodating variations in the current consumption, the output power, etc., due to a load variation.

While the invention has been described in detail, the foregoing description is in all aspects illustrative and not restrictive. It is understood that numerous other modifications and variations can be devised without departing from the scope of the invention.

## Claims

1. A radio device, comprising:
an antenna (3);
a power amplif ier (4) having an output terminal connected to the antenna for amplifying a transmitted signal to be radiated through the antenna;
an element (7, 8) connected to the antenna for matching the antenna;
a first connection switch (2i) provided between the antenna and the element;
a match detection section (5, 10) for detecting a variation in a match condition of the antenna; and
a control circuit (6) for closing the first connection switch when a variation in the match condition of the antenna is detected by the match detection section.

2. The radio device according to claim 1, further comprising:
a receiver circuit (1) connected to the antenna for receiving a signal received by the antenna; and
a second connection switch (2g,2h) provided at a position which is between the power amplifier and the antenna and is also between the receiver circuit and the antenna,
wherein the second connection switch connects the power amplifier and the antenna to each other while disconnecting the receiver circuit and the antenna from each other when radiating the transmitted signal through the antenna, and the second connection switch connects the receiver circuit and the antenna to each other while disconnecting the power amplifier and the antenna from each other when receiving a signal through the antenna.

3. The radio device according to claim 1, wherein the match detection section is a reflected wave detection circuit (5) provided between the output terminal of the power amplifier and the antenna for detecting a reflected wave of the transmitted signal at the antenna exceeding a predetermined level.

4. The radio device according to claim 1, wherein the match detection section is a current detection circuit (10) provided between a power supply terminal of the power amplifier and the control circuit for detecting a variation in a current consumptionofthepoweramplifierexceedingapredeterminedlevel.

5. The radio device according to claim 1, wherein the control circuit keeps the first connection switch closed for a predetermined period of time after the match detection section no longer detects a variation in the match condition of the antenna.

6. A radio device, comprising:
an antenna (3);
a power amplifier (4) having an output terminal connected to the antenna for amplifying a transmitted signal to be radiated through the antenna;
a spare antenna (9) connected to the power amplifier;
a first connection switch (2i) provided between the spare antenna and the power amplifier;
a match detection section (5, 10) for detecting a variation in a match condition of the antenna; and
a control circuit (6) for closing the first connection switch when a variation in the match condition of the antenna is detected by the match detection section.

7. The radio device according to claim 6, further comprising a third connection switch (2j) provided between the antenna and the power amplifier,
wherein the control circuit opens the third connection switch when a variation in the match condition of the antenna is detected by the match detection section.

8. The radio device according to claim 6, further comprising:
a receiver circuit (1) connected to the antenna for receiving a signal received by the antenna; and
a second connection switch ( 2g, 2h) provided at a position which is between the power amplifier and the antenna and is also between the receiver circuit and the antenna,
wherein the second connection switch connects the power amplifier and the antenna to each other while disconnecting the receiver circuit and the antenna from each other when radiating the transmitted signal through the antenna, and the second connection switch connects the receiver circuit and the antenna to each other while disconnecting the power amplifier and the antenna from each other when receiving a signal through the antenna.

9. The radio device according to claim 6, wherein the match detection section is a reflected wave detection circuit (5) provided between the output terminal of the power amplifier and the antenna for detecting a reflected wave the transmitted signal at the antenna exceeding a predetermined level.

10. The radio device according to claim 6, wherein the match detection section is a current detection circuit (10) provided between a power supply terminal of the power amplifier and the control circuit for detecting a variation in a current consumption of the power amplifier exceeding a predetermined level.

11. The radio device according to claim 6, wherein the control circuit keeps the first connection switch closed for a predetermined period of time after the match detection section no longer detects a variation in the match condition of the antenna.
